(19) Europäisches Patentamt
European Patent Office
Office européen des brevets

(11) **EP 1 608 227 B1**

(12) **EUROPEAN PATENT SPECIFICATION**

(45) Date of publication and mention
of the grant of the patent:
**26.08.2015 Bulletin 2015/35**

(21) Application number: **03732894.5**

(22) Date of filing: **23.05.2003**

(51) Int Cl.:
*A21D 8/04* (2006.01)        *A21D 2/16* (2006.01)
*A21D 2/26* (2006.01)        *A23L 1/105* (2006.01)
*A23L 1/16* (2006.01)

(86) International application number:
**PCT/IB2003/002585**

(87) International publication number:
**WO 2003/099016 (04.12.2003 Gazette 2003/49)**

(54) **A METHOD OF IMPROVING THE RHEOLOGICAL PROPERTIES OF A FLOUR DOUGH**

EINE METHODE DES VERBESSERNS DER RHEOLOGISCHEN EIGENSCHAFTEN EINES MEHLTEIGS

PROCEDE D'AMELIORATION DES PROPRIETES RHEOLOGIQUES D'UNE PATE A BASE DE FARINE

(84) Designated Contracting States:
**AT BE BG CH CY CZ DE DK EE ES FI FR GB GR HU IE IT LI LU MC NL PT RO SE SI SK TR**

(30) Priority: **24.05.2002   GB 0211975**

(43) Date of publication of application:
**28.12.2005   Bulletin 2005/52**

(73) Proprietor: **DuPont Nutrition Biosciences ApS**
**1001 Copenhagen K. (DK)**

(72) Inventors:
• **OLSEN, Torkil Steenholt**
**62584 Temixco,**
**Morelos (MX)**

• **POVLSEN, Inge, Lise**
**DK-8660 Skanderborg (DK)**

(74) Representative: **D Young & Co LLP**
**120 Holborn**
**London EC1N 2DY (GB)**

(56) References cited:
**EP-A- 1 108 360          WO-A-97/41736**
**WO-A-99/31990          WO-A1-96/39851**
**US-A1- 2002 064 577**

**Description**

FIELD OF THE INVENTION

The present invention relates to a method for preparing flour products - such as flour doughs - and cooked and/or baked products therefrom.

More in particular, the present invention relates to the field of food manufacturing, in particular to the preparation of improved bakery products and other farinaceous food products. Specifically, the invention concerns the use of a new combination for improving the stability and/or machineability of dough and/or improving the quality of baked and dried products made from such doughs.

TECHNICAL BACKGROUND AND PRIOR ART

The "strength" or "weakness" of doughs is an important aspect of making farinaceous finished products from doughs, including baking. The "strength" or "weakness" of a dough is primarily determined by its content of protein and in particular the content and the quality of the gluten protein is an important factor in that respect. Flours with a low protein content are generally characterised as "weak". Thus, the cohesive, extensible, rubbery mass which is formed by mixing water and weak flour will usually be highly extensible when subjected to stress, but it will not return to its original dimensions when the stress is removed.

Flours with a high protein content are generally characterised as "strong" or "hard" flours and the mass formed by mixing such a flour and water will be less extensible than the mass formed from a weak flour, and stress which is applied during mixing will be restored without breakdown to a greater extent than is the case with a dough mass formed from a weak flour. Strong flour is generally preferred in most baking contexts because of the superior rheological and handling properties of the dough and the superior form and texture qualities of the finished baked or dried products made from the strong flour dough.

Dough quality may be largely dependent on the type or types of flour present in the dough and/or the age of the flour or flours.

Doughs made from strong flours are generally more stable. Stability of a dough is one of the most important characteristics of flour doughs. Within the bakery and milling industries it is known to use dough "conditioners" to strengthen the dough to increase its stability and strength. Such dough conditioners are normally non-specific oxidising agents such as e.g. iodates, peroxides, ascorbic acid, K-bromate or azodicarbonamide and they are added to dough with the aims of improving the baking performance of flour to achieve a dough with improved stretchability and thus having a desirable strength and stability. The mechanism behind this effect of oxidising agents is that the flour proteins, in particular gluten contains thiol groups which, when they become oxidised, form disulphide bonds whereby the protein forms a more stable matrix resulting in a better dough quality and improvements of the volume and crumb structure of the baked products.

However, the use of several of the currently available non-specific oxidising agents is either objected to by consumers or is not permitted by regulatory bodies. Hence it has been attempted to find alternatives to these conventional flour and dough additives, and the prior art has *inter alia* (i.a.) suggested the use of oxidoreductases such as glucose oxidase (EC 1.1.3.4), carbohydrate oxidase, glycerol oxidase, pyranose oxidase (EC 1.1.3.10) and hexose oxidase for this purpose.

US 2,783,150 discloses the addition of glucose oxidase to flour to improve dough strength and texture and appearance of baked bread.

CA 2,012,723 discloses bread improving compositions comprising cellulolytic enzymes such as xylanases and glucose oxidase, the latter enzyme being added to reduce certain disadvantageous effects of the cellulolytic enzymes (reduced dough strength and stickiness) and it is disclosed that addition of glucose is required to obtain sufficient glucose oxidase activity.

JP-A-92-084848 suggests the use of a bread improving composition comprising glucose oxidase and lipase.

As disclosed in WO 96/39851, the use of glucose oxidase as a dough improving additive has the limitation that this enzyme requires the presence of sufficient amounts of glucose as a substrate in order to be effective in a dough system and generally the glucose content in cereal flours is low. Therefore the absence of glucose in doughs or the low content thereof in doughs will be a limiting factor for the effectiveness of glucose oxidase as a dough improving agent.

WO 96/39851 discloses a method of improving the rheological properties of a flour dough and the quality of the finished product made from the dough comprising adding to the dough an oxidoreductase such as hexose oxidase (HOX).

Hexose oxidase (HOX) (D-hexose:$O_2$-oxidoreductase, EC 1.1.3.5) is an enzyme which in the presence of oxygen is capable of oxidising D-glucose and several other reducing sugars including maltose, glucose, lactose, galactose, xylose, arabinose and cellubiose to their corresponding lactones with subsequent hydrolysis to the respective aldobionic acids. Accordingly, hexose oxidases differ from glucose oxidase which can only convert D-glucose, in that hexose oxidases can utilise a broader range of sugar substrates.

WO 94/04035 discloses a method of improving properties of a dough (with and without fat) and/or baked product made from dough by adding a lipase of microbial origin to the dough. The use of the microbial lipase resulted in an increased volume and improved softness of the baked product. Furthermore an antistaling effect was found.

EP 1 108 360 A1 discloses a method of preparing a flour dough. The method comprises adding to the dough components an enzyme that under dough conditions is capable of hydrolysing a nonpolar lipid, a glycolipid and a phospholipid, or a composition containing said enzyme and mixing the dough components to obtain the dough.

WO 02/03805 discloses that the addition to dough of a combination of two lipases with different substrate specificities. The combination produces a synergistic effect on the dough or on a baked product made from the dough. Optionally, an additional enzyme may be used together with the lipase.

WO 99/31990 discloses a process for preparing a dough and/or baked product made from a dough comprising adding to the dough a carbohydrate oxidase which has a higher activity on an oligosaccharide having a degree of polymerization of 2 or higher as a substrate than on a corresponding monosaccharide.

## SUMMARY OF THE INVENTION

We have surprisingly found that a combination of a maltose oxidising enzyme "MOX" and an emulsifying agent results in particularly advantageous properties in dough and dough products and/or in baked products therefrom. In particular the stability (e.g. shock stability) and/or rheological (e.g. decrease in stickiness) and/or machineability properties and/or the resultant volume of either the dough and/or baked products (e.g. baked products with better crumb structure and/or homogeneity) is/are improved. Furthermore, the combination of the MOX and emulsifying agent results in an improvement in bread quality, in particular in respect of specific volume and/or crumb homogeneity,.

We describe the use of a MOX and an emulsifying agent to improve the rheological and/or machineability properties of dough.

We describe the use of a MOX and an emulsifying agent to improve the volume of a baked product made from a dough.

## DETAILED ASPECTS

In one aspect the invention provides a method of improving the rheological and/or machineability properties of a flour dough and/or the quality (e.g. volume) of the product made from the dough, comprising adding to the dough a combination comprising a maltose oxidising enzyme (MOX) and an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism.

Factors which influence the rheological properties and/or the machineability include stickiness and extensibility.

Suitable maltose oxidising enzymes for use in accordance with the present invention and/or for use in the method of the present invention include (but are not limited to) an enzyme selected from the group consisting of: the hexose oxidase disclosed in WO96/39851; the carbohydrate oxidase disclosed in EP 1 041 890; the glucooligosaccharide disclosed in Lin S.F. et al Biochim. Biophys. Acta 1991 (Dec 11); 1118(1):41-47 or variants or homologues or derivatives of any thereof. Each of these references is incorporated herein by reference. Other suitable enzyme may be identified by screening for maltose oxidising ability.

Preferably, the MOX is an oxidoreductase.

A highly preferred MOX is a hexose oxidase (HOX).

In another aspect the invention provides a method of improving the rheological and/or machineability properties of a flour dough and/or the quality (e.g. volume) of the product made from the dough, comprising adding to the dough a combination comprising a MOX and an emulsifying agent wherein the flour dough comprises at least one further dough additive or ingredient and wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a method of improving the rheological and/or machineability properties of a flour dough and/or the quality (e.g. volume) of the product made from the dough, comprising adding to the dough a combination comprising a MOX and an emulsifying agent wherein the product is selected from the group consisting of a bread product, a noodle product, a cake product, a pasta product and an alimentary paste product and wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a method of improving the rheological and/or machineability properties of a flour dough and/or the quality (e.g. volume) of the product made from the dough, comprising adding to the dough a combination comprising a MOX and an emulsifying agent wherein at least one further enzyme is added to the dough ingredients, dough additives or the dough and wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a dough improving composition comprising a MOX and an emulsifying agent and wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a dough improving composition comprising a MOX and an emulsifying agent wherein the flour dough comprises at least one further dough additive or ingredient and wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides use of a dough improving composition comprising a MOX and an emulsifying agent in the manufacture of a product made from dough wherein the product is selected from the group consisting of a bread product, a noodle product, a cake product, a pasta product and an alimentary paste product wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a dough improving composition comprising a MOX and an emulsifying agent wherein at least one further enzyme is added to the dough ingredients, dough additives or the dough wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides use of a dough improving composition comprising a MOX and an emulsifying agent wherein said composition improves the rheological and/or machineability properties of flour dough wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides use of a dough improving composition comprising a MOX and an emulsifying agent wherein said composition improves the volume of a baked product made from a flour dough wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a dough for addition to a sponge wherein said dough comprises a MOX and an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism.

In another aspect the invention provides a dough for addition to a sponge wherein said dough comprises a MOX and an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism and wherein the dough comprises at least one further dough additive or ingredient.

In another aspect the invention provides a dough improving composition wherein said dough improving composition comprises at least the following components: a MOX, an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism and a further enzyme.

In another aspect the invention provides a dough improving composition wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein said further enzyme is a xylanase.

In a further aspect, the invention provides the use of a dough improving composition in baking wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein said further enzyme is optionally a xylanase.

In another aspect, the invention provides a process for producing a dough improving composition comprising adding to one or two of the components of said dough improving composition two or one of the other components respectively wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein said further enzyme is optionally a xylanase.

In a further aspect, the invention provides a baked product or dough obtained from the dough improving composition wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein said further enzyme is optionally a xylanase.

In another aspect, the invention provides a baked product or dough obtained from the use of a dough improving composition wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein the further enzyme is optionally a xylanase.

In another aspect, the invention provides a baked product or dough obtained from a process for producing a dough improving composition comprising adding to one or two of the components of said dough improving composition two or one of the other components respectively wherein said dough improving composition comprises at least the following components: a MOX, an emulsifying agent and a further enzyme wherein the emulsifying agent is a lipase and wherein said lipase is a purified lipolytic enzyme from *Fusarium oxysporum* produced by submerged fermentation of a genetically modified *Aspergillus oryzae* microorganism and wherein the further enzyme is optionally a xylanase.

**Dough Preparation**

In accordance with the invention, the dough is prepared by admixing flour, water, the dough improving composition and optionally other ingredients and additives. The dough improving composition can be added together with any dough ingredient including the flour, water or optional other ingredients or additives. The dough improving composition can be added before the flour or water or optional other ingredients and additives. The dough improving composition can be added after the flour or water, or optional other ingredients and additives. The dough can be prepared by any conventional dough preparation method common in the baking industry or in any other industry making flour dough based products.

The dough improving composition can be added as a liquid preparation or in the form of a dry powder composition either comprising the composition as the sole active component or in admixture with one or more other dough ingredients or additive.

Dough

The dough of the invention generally comprises wheat meal or wheat flour and/or other types of meal, flour or starch such as corn flour, corn starch, maize flour, rice flour, rye meal, rye flour, oat flour, oat meal, soy flour, sorghum meal, sorghum flour, potato meal, potato flour or potato starch.

The dough of the invention may be fresh, frozen, or part-baked.

The dough of the invention can be a leavened dough or a dough to be subjected to leavening. The dough may be leavened in various ways, such as by adding chemical leavening agents, e.g., sodium bicarbonate or by adding a leaven (fermenting dough), but it is preferred to leaven the dough by adding a suitable yeast culture, such as a culture of *Saccharomyces cerevisiae* (baker's yeast), e.g. a commercially available strain of *S. cerevisiae*.

The dough may also comprise other conventional dough ingredients, e.g.: proteins, such as milk powder, gluten, and soy; eggs (either whole eggs, egg yolks or egg white); an oxidant such as ascorbic acid, potassium bromate, potassium iodate, azodicarbonamide (ADA) or ammonium persulfate; an amino acid such as L-cysteine; a sugar; a salt such as sodium chloride, calcium acetate, sodium sulfate or calcium sulfate.

The dough may comprise fat such as granulated fat or shortening.

The dough may further comprise a further emulsifier such as mono- or diglycerides, sugar esters of fatty acids, polyglycerol esters of fatty acids, lactic acid esters of monoglycerides, acetic acid esters of monoglycerides, polyoxethylene stearates, or lysolecithin.

The invention also provides a pre-mix comprising flour together with the combination as described herein. The pre-mix may contain other dough-improving and/or bread-improving additives, e.g. any of the additives, including enzymes, mentioned herein.

Preferably the flour dough comprises a hard flour.

The term "hard flour" as used herein refers to flour which has a higher protein content such as gluten than other flours and is suitable for the production of, for example, bread. The term "hard flour" as used herein is synonymous with the term "strong flour".

A preferred flour is wheat flour. However doughs comprising flour derived from, for example, maize, corn, oat, barley, rye, durra, rice, soy, sorghum and potato are also contemplated.

Preferably the flour dough comprises a hard wheat flour.

Rheological properties

The phrase "rheological properties" as used herein relates to the physical and chemical phenomena described herein which in combination will determine the performance of flour doughs and thereby also the quality of the resulting products.

The phrase "machineability of a flour dough" as used herein refers to the improved manipulation by machinery of the dough. The dough is less sticky compared to the dough without the addition of the combination.

In a further embodiment, the invention relates to improvement of the rheological characteristics of the dough including that the gluten index in the dough is increased by at least 5%, relative to a dough without addition of a combination, the gluten index is determined by means of a Glutomatic 2200 apparatus.

The phrase "rheological properties" as used herein refers to the effects of dough conditioners on dough strength and stability as the most important characteristics of flour doughs. According to American Association of Cereal Chemists (AACC) Method 36-01A the term "stability" can be defined as "the range of dough time over which a positive response is obtained and that property of a rounded dough by which it resists flattening under its own weight over a course of time". According to the same method, the term "response" is defined as "the reaction of dough to a known and specific stimulus, substance or set of conditions, usually determined by baking it in comparison with a control".

As it is mentioned herein, it is generally desirable to improve the baking performance of flour to achieve a dough with improved stretchability and thus having a desirable strength and stability by adding oxidising agents which cause the formation of protein disulphide bonds whereby the protein forms a more stable matrix resulting in a better dough quality and improvements of the volume and crumb structure of baked products.

The effect of the combination on the rheological properties of the dough can be measured by standard methods according to the International Association of Cereal Chemistry (ICC) and the American Association of Cereal Chemistry (AACC) including the amylograph method (ICC 126), the farinograph method (AACC 54-21) and the extensigraph method (AACC 54-10). The AACC method 54-10 defines the extensigraph in the following manner: "the extensigraph records a load-extension curve for a test piece of dough until it breaks. Characteristics of load-extension curves or extensigrams are used to assess general quality of flour and its responses to improving agents". In effect, the extensigraph method measures the relative strength of a dough. A strong dough exhibits a higher and, in some cases, a longer extensigraph curve than does a weak dough.

In a preferred embodiment of the invention, the resistance to extension of the dough in terms of the ratio between the resistance to extension (height of curve, B) and the extensibility (length of curve, C), i.e. the B/C ratio as measured by the AACC method 54-10 is increased by at least 10% relative to that of an otherwise similar dough not containing a combination. In more preferred embodiments, the resistance to extension is increased by at least 20%, such as at least 50% and in particular by at least 100%.

It has been found that the addition of the composition of the present invention to bakery product doughs results in bakery products such as yeast leavened and chemically leavened products in which the specific volume is increased relative to an otherwise similar bakery product. In this context, the expression "specific volume" is used to indicate the ratio between volume and weight of the product. It has been found that, in accordance with the method described herein, the specific volume can be increased significantly such as by at least 10%, preferably by at least 20%, including by at least 30%, preferably by at least 40% and more preferably by at least 50%.

The present invention is highly suitable for improving the rheological and/or machineability properties and/or quality (e.g. volume) of the finished products (products made from the dough) of conventional types of yeast leavened bread products based on wheat flour, such as loaves and rolls. The present invention is also suitable for improving the rheological properties of doughs containing chemical leavening agents (baking powder) and the quality (e.g. volume) of products made from such doughs. Such product include as examples breads, sponge cakes and muffins.

**Noodles**

In one interesting aspect, the invention is used to improve the rheological and/or machineability properties of doughs intended for noodle products including "white noodles" and "chinese noodles" and to improve the textural qualities of the finished noodle products. A typical basic recipe for the manufacturing of noodles comprises the following ingredients: wheat flour 100 parts, salt 0.5 parts and water 33 parts. Furthermore, glycerol is often added to the noodle dough. The noodles are typically prepared by mixing the ingredients in an appropriate mixing apparatus followed by rolling out the noodle dough using an appropriate noodle machine to form the noodle strings which are subsequently air dried.

The quality of the finished noodles is assessed *inter alia* (i.a.) by their colour, cooking quality and texture. The noodles should cook as quickly as possible, remain firm after cooking and should preferably not loose any solids to the cooking water. On serving the noodles should preferably have a smooth and firm surface not showing stickiness and provide a firm "bite" and a good mouthfeel. Furthermore, it is important that the white noodles have a light colour.

Since the appropriateness of wheat flour for providing noodles having the desired textural and eating qualities may vary according to the year and the growth area, it is usual to add noodle improvers to the dough in order to compensate for sub-optimal quality of the flour. Typically, such improvers will comprise dietary fibre substances, vegetable proteins, emulsifiers and hydrocolloids such as e.g. alginates, carrageenans, pectins, vegetable gums including guar gum and locust bean gum, and amylases, and glycerol.

It is therefore an important aspect of the invention that the composition according to the invention is useful as a noodle-improving agent optionally in combination with glycerol and other components currently used to improve the quality of noodles. Thus, it is contemplated that noodles prepared in accordance with the method herein will have improved properties with respect to colour, cooking and eating qualities including a firm, elastic and non-sticky texture and consistency.

**Alimentary paste product**

In a further useful embodiment, the dough which is prepared by the method according to the invention is a dough for preparing an alimentary paste product. Such products which include as examples spaghetti and macaroni are typically prepared from a dough comprising main ingredients such as flour, eggs or egg powder and/or water. After mixing of the ingredient, the dough is formed to the desired type of paste product and air dried. It is contemplated that the addition of the combination to paste dough, optionally in combination with its substrate, will have a significant improving effect on the extensibility and stability hereof resulting in finished paste product having improved textural and eating qualities.

Bread

In the invention the improvement of the rheological properties of the dough include that the resistance to extension of the dough in terms of the ratio between resistance to extension (height of curve, B) and the extensibility (length of curve, C), i.e. the B/C ratio, as measured by the AACC method 54-10 is increased by at least 10% relative to that of an otherwise similar dough that does not comprise the combination and wherein the improvement of the quality of the finished product made from the dough is that the average pore diameter of the crumb of the bread made from the dough is reduced by at least 10%, relative to a bread which is made from a bread dough without addition of the combination.

In a further embodiment, the invention, implies that the improvement of the quality of the product made from the dough consists in that the pore homogeneity of the crumb of the bread made from the dough is increased by at least 5%, relative to a bread which is made from a bread dough without addition of the combination. The pore homogeneity of bread is conveniently measured by means of an image analyser composed of a standard CCD-video camera, a video digitiser and a personal computer with WinGrain software. Using such an analyzer, the results of pore diameter in mm and pore homogeneity can be calculated as an average of measurements from 10 slices of bread. The pore homogeneity is expressed in % of pores that are larger than 0.5 times the average of pore diameter and smaller than 2 times the average diameter.

Preferably, the dough is a yeast leavened dough. Although, it is preferred to use the method of the present invention for the manufacture of yeast leavened bread products such as bread loaves, rolls or toast bread, the use of the method for any other type of dough and dough based products such as noodle and pasta products and cakes, the quality of which can be improved by the addition of the combination according to the present invention, is also contemplated.

Preferably the method comprises a further step that the dough is baked to obtain a baked product.

Preferably, when the dough is a bread dough, the method comprises as a further step that the dough is baked to obtain a baked product. One particularly desired property of baked bread products is a high specific volume as defined in the examples. Accordingly, the addition of the combination of the invention preferably results in an increase of the specific volume of the baked product that is at least 10%, relative to a baked product made under identical conditions except that the enzyme is not added. More preferably, the increase of the specific volume is at least 20% such as at least 30%, e.g. at least 40%. Alternatively, the dough is a dough selected from the group consisting of a pasta dough, a noodle dough, and a cake dough or batter.

The phrase "quality of the product" as used herein refers to the final and stable volume and/or crust colour and/or texture and taste.

In one aspect of the present invention, the term "product made from dough" as used herein refers to a bread product such as in the form of loaves or rolls, french baguette type bread, pita bread, tacos and crisp bread. In a highly preferred embodiment, the "product made from dough" is a bread product such as loaves, rolls, french baguette type bread, pita bread, and crisp bread.

In another aspect of the present invention, the term "product made from dough" refers to cakes, pan-cakes, biscuits.

In a further aspect of the present invention the term "product made from dough" refers to pasta.

In another aspect of the present invention,, the term "product made from dough" refers to noodles.

In a further aspect of the present invention, the term "product made from dough" refers to alimentary paste product.

**Enzyme amount**

Preferably the or each enzyme is added in an amount from 1-1000 ppm, preferably 25-500 ppm, more preferably 50-300 ppm.

**MOX activity assay**

Suitable maltose oxidising enzymes for use in accordance with the present invention and/or for use in the method of the present invention include (but are not limited to) an enzyme selected from the group consisting of: the hexose oxidase disclosed in WO96/39851; the carbohydrate oxidase disclosed in EP 1 041 890; the glucooligosaccharide disclosed in Lin S.F. et al Biochim. Biophys. Acta 1991 (Dec 11); 1118(1):41-47 or variants or homologues or derivatives of any thereof. Each of these references is incorporated herein by reference.

Other suitable enzyme may be identified by screening for maltose oxidising ability - such as by using appropriate assay(s).

The MOX assay is based on the measurement of hydrogen peroxide generated in the oxidation of maltose. The hydrogen peroxide is oxidised with ABTS in presence of peroxidase to form a dye.

$$\text{maltose} + H_2O + O_2 \xrightarrow{\text{MOX}} \text{D-glucono-delta-lactone} + H_2O_2$$

$$H_2O_2 + ABTS_{red} \xrightarrow{\text{Peroxidase}} O_2 + H_2O + ABTS_{ox.}$$

Reagents:

1) 100 mM phosphate buffer, pH 6.3
2) 55 mM maltose (SIGMA, 47288) in 100 mM phosphate buffer, pH 6.3
3) ABTS (SIGMA, A 1888), 5.0 mg/ml in distilled water
4) Peroxidase (SIGMA, P-6782), 0.10 mg/ml in 100 mM phosphate buffer, pH 6.3

Substrate:

4.600 ml reagent 2
0.200 ml reagent 3
0.200 ml reagent 4

Assay:

290 $\mu$l substrate and
10 $\mu$l enzyme solution

The reaction is initiated by the addition of enzyme solution. The mixture is incubated at 25°C and kinetics of the reaction are measured for 10 minutes on a spectrophotometer (405 nm). The blank sample contains all the components except for the enzyme solution which is replaced by water. From the measurement the slope of OD/min curve is calculated. Hydrogen peroxide standard curve: A hydrogen peroxide standard curve can be constructed by using varying concentrations of freshly prepared $H_2O_2$ solution (MERCK perhydrol 107298). One unit of enzyme activity is defined as the amount of enzyme which produced 1 μmol of $H_2O_2$ per min at 25°C.

Preferably, the MOX is an oxidoreductase.

**HOX**

A highly preferred MOX is HOX.

The term "HOX" as used herein refers to Hexose oxidase (D-hexose:$O_2$-oxidoreductase, EC 1.1.3.5).

Hexose oxidase is capable of oxidising maltose. Hexose oxidase in the presence of oxygen is capable of oxidising D-glucose and several other reducing sugars including maltose, lactose, galactose, xylose, arabinose and cellobiose to their corresponding lactones with subsequent hydrolysis to the respective aldobionic acids. Accordingly, hexose oxidases differ from glucose oxidase which can only convert D-glucose, in that hexose oxidases can utilise a broader range of sugar substrates. The oxidation catalysed by the enzyme can be illustrated as follows:

$$\text{D-Glucose} + O_2 \longrightarrow \delta\text{-D-gluconolactone} + H_2O_2,$$

or

$$\text{D-Galactose} + O_2 \longrightarrow \gamma\text{-D-galactogalactone} + H_2O_2$$

or

$$\text{Maltose} + O_2 \longrightarrow \text{g-maltobionolactone} + H_2O_2 \text{ or}$$

$$\text{(in gluten)} 2 \text{ RHS} + H_2O_2 \longrightarrow \text{RS -SR} + 2H_2O$$

where R: Protein molecule HS: Thiol groups S-S: Disulfide bonds

Hexose oxidase (which may be referred to hereinafter as "HOX") has been isolated from several red algal species from the family *Gigartinaceae,* which belong to the order *Gigartinales,* such as *Iridophycus flaccidum* (Bean and Hassid, 1956, J. Biol. Hem., 218:425-436) and *Chondrus crispus* (Ikawa 1982, Methods Enzymol., 89:145-149). Additionally, algal species in the order *Cryptomeniales,* including the species *Euthora cristata* (Sullivan et al. 1973, Biochemica et Biophysica Acta, 309:11-22) have been shown to produce HOX.

Other potential sources of hexose oxidase according to the present invention include microbial species or land-growing plant species. Thus, as an example of such a plant source, Bean et al., Journal of Biological Chemistry (1961) 236: 1235-1240, disclosed an oxidoreductase from citrus fruits which is capable of oxidizing a broad range of sugars including D-glucose, D-galactose, cellobiose, lactose, maltose, D-2-deoxyglucose, D-mannose, D-glucosamine and D-xylose. Another example of an enzyme having hexose oxidase activity is the enzyme system of *Malleomyces mallei* disclosed by Dowling et al., Journal of Bacteriology (1956) 72:555-560.

The HOX may be isolated and/or purified from natural sources or it may be prepared by use of recombinant DNA techniques.

An enzyme(s) having HOX activity and prepared by recombinant DNA techniques is taught in WO96/40935. The enzyme(s) taught therein may be suitable for use in accordance with the present invention. This document is incorporated herein by reference.

US6251626 discloses a HOX enzyme including sequences, which enzyme may be suitable for use in accordance with the present invention.

The HOX enzyme for use in accordance with the present invention may be a variant or derivative of a natural HOX.

The HOX enzyme, or a variant or derivative of a natural HOX, suitable for use in accordance with the present invention preferably oxidises maltose in the dough (i.e *in situ* oxidisation of maltose).

Preferably, the HOX is added in a substantially pure and/or substantially isolated form. When using natural sources for hexose oxidase, the enzyme is typically isolated from the starting material, such as the algal starting material, by extraction using an aqueous extraction medium. As starting material, algae in their fresh state as harvested from the marine area where they grow may be used and/or algal material which has been dried may be used, e.g. by air-drying the fronds of the algae at ambient temperatures or by any appropriate industrial drying method such as drying in circulated heated air or by freeze-drying. In order to facilitate the subsequent extraction step, the fresh and/or dried starting material may advantageously be comminuted e.g. by grinding or blending.

As the aqueous extraction medium, buffer solutions, e.g. having a pH in the range of 5-8, such as 0.1 M sodium phosphate buffer, 20 mM triethanolamine buffer or 20 mM Tris-HCl buffer, are suitable. The hexose oxidase is typically extracted from the algal material by suspending the starting material in the buffer and keeping the suspension at a temperature in the range of 0-20°C such as at about 5°C for 1 to 5 days, preferably under agitation.

The suspended algal material is then separated from the aqueous medium by an appropriate separation method such as filtration, sieving or centrifugation and the hexose oxidase is subsequently recovered from the filtrate or supernatant. Optionally, the separated algal material is subjected to one or more further extraction steps.

Since several marine algae contain coloured pigments such as phycocyanins, it may be required to subject the filtrate or supernatant to a further purification step whereby these pigments are removed. As an example, the pigments may be removed by treating the filtrate or supernatant with an organic solvent in which the pigments are soluble and subsequently separating the solvent containing the dissolved pigments from the aqueous medium. Alternatively, pigments may be removed by subjecting the filtrate or supernatant to a hydrophobic interaction chromatography step.

The recovery of hexose oxidase from the aqueous extraction medium is carried out by any suitable conventional method allowing isolation of proteins from aqueous media. Such methods, examples of which are described in detail in WO96/39851 (which application is incorporated herein by reference), include conventional methods for isolation of proteins such as ion exchange chromatography, optionally followed by a concentration step such as ultrafiltration. It is also possible to recover the enzyme by adding substances such as e.g. $(NH_4)_2SO_4$ or polyethylene glycol (PEG) which causes the protein to precipitate, followed by separating the precipitate and optionally subjecting it to conditions allowing the protein to dissolve.

For certain applications of hexose oxidase it is desirable to provide the enzyme in a substantially pure form, e.g. as a preparation essentially without other proteins or non-protein contaminants, and accordingly, the relatively crude enzyme preparation resulting from the above extraction and isolation steps may be subjected to further purification steps such as further chromatography steps, gel filtration or chromatofocusing as also described by way of example in WO96/39851.

Reference is also made herein to the following US applications US SN 60/438,852, US SN 10/001,136 and US SN 60/256,902, and WO02/39828 each of which is incorporated herein by reference, and which relate to the use of HOX in baked products.

**HOX activity assay:**

The HOX activity assay is based on the measurement of hydrogen peroxide generated in the oxidation of glucose. The hydrogen peroxide is oxidised with ABTS in presence of peroxidase to form a dye.

$$\beta\text{-D-glucose} + H_2O + O_2 \xrightarrow{\text{HOX}} \text{D-glucono-delta-lactone} + H_2O_2$$

$$H_2O_2 + ABTS_{red} \xrightarrow{\text{Peroxidase}} 2\,H_2O + ABTS_{ox.}$$

Reagents:

1) 100 mM phosphate buffer, pH 6.3;
2) 55 mM D-glucose (SIGMA, G-8270) in 100 mM phosphate buffer, pH 6.3;
3) ABTS (SIGMA, A 1888), 5.0 mg/ml in distilled water;
4) peroxidase (SIGMA, P-6782), 0.10 mg/ml in 100 mM phosphate buffer, pH 6.3

Substrate:

4.600 ml reagent 2;
0.200 ml reagent 3;
0.200 ml reagent 4

Assay:

290 µl substrate

10 µl enzyme solution

The reaction is initiated by the addition of enzyme solution. The mixture is incubated at 25°C and kinetics of the reaction are measured for 10 minutes on a spectrophotometer (405 nm). The blank sample contains all of the components except for the enzyme solution which is replaced by water. From the measurement the slope of OD/min curve is calculated. Hydrogen peroxide standard curve: A hydrogen peroxide standard curve can be constructed by using varying concentrations of freshly prepared $H_2O_2$ solution (MERCK perhydrol 107298). One unit of enzyme activity is defined as the amount of enzyme which produced 1 µmol of $H_2O_2$ per min at 25°C.

HOX is available commercially under the trade name Grindamyl™ SUREBAKE 800 available from Danisco A/S.

**Emulsifying agent**

The emulsifying agent is a lipase wherein the lipase is a purified lipolytic enzyme from *Fusarium oxysporum* produced by submerged fermentation of a genetically modified *Aspergillus oryzae* microorganism.

Thus the emulsifying agent is an agent that generates an emulsifier *in situ,* since examples of emulsifying agents that can generate an emulsifier *in situ* include enzymes.

**Lipase**

In general terms the term "lipase" as used herein refers to enzymes which are capable of hydrolysing carboxylic ester bonds to release carboxylate (EC 3.1.1). The present invention employs a lipase wherein the lipase is a purified lipolytic enzyme from *Fusarium oxysporum* produced by submerged fermentation of a genetically modified *Aspergillus oryzae* microorganism.

For some aspects, preferably the lipase is a phospholipase (including a variant or derivative thereof).

In another aspect, preferably the lipase is a galactolipase (including a variant or derivative thereof).

For some aspects, preferably the lipase has both triacylglycerol lipase and galactolipase activity (including variants and derivatives thereof).

For some aspects, preferably the lipase has both triacylglycerol lipase and phospholipase activity (including variants and derivatives thereof).

For some aspects, preferably the lipase has both phospholipase and galactolipase activity (including variants and derivatives thereof).

For some aspects, preferably the lipase has phospholipase, galactolipase and triacylglycerol activity (including a variant or derivative).

For some aspects, preferably the lipase has phospholipase, galactolipase and triacylglycerol activity (including a variants or derivatives thereof), and the lipase has a preference for hydrolysis of long chain fatty acid residues (C12-C20) over short chain fatty acid residues (C4-C10). An example of such a lipase is a lipase comprising a polypeptide wherein said polypeptide comprises a sequence as shown in SEQ ID No 2 (or a variant or derivative or homologue thereof), said lipase can be prepared by the methods disclosed in GRAS Notice 000103, copies of which are available from the Department of Health & Human Services, Food & Drug Administration, Washington DC 20204. Other suitable lipases are disclosed in WO00/32758.

For some aspects, preferably a combination of more than one lipases may be used, such as the combinations of lipases disclosed in WO02/03805.

Preferably the lipase is added in a substantially pure and/or substantially isolated form.

Lipases that are useful in the present invention can be derived from a bacterial species, a fungal species, a yeast species, an animal cell and a plant cell. Whereas the enzyme may be provided by cultivating cultures of such source organisms naturally producing lipase, it may be more convenient and cost-effective to produce it by means of genetically modified cells such as it is described WO 9800136. The term "derived" may imply that a gene coding for the lipase is isolated from a source organism and inserted into a host cell capable of expressing the gene.

Suitable lipases for use in accordance with the present invention and/or for use in the method of the present invention include (but are not limited to) one or more lipase selected from the lipases disclosed in EP0130064, WO 98/26057, WO00/32758,, WO 02/03805, and LipopanH, also referred to as Lecitase UltraTM and HL1232 (LipopanH is disclosed in GRAS Notice 000103, copies of which are available from the Department of Health & Human Services, Food & Drug Administration, Washington DC 20204). Each of these references is incorporated herein by reference.

Suitably, for some aspects of the present invention the lipase may be LipopanF (supplied by Novozymes) or a variant, derivative or homologue thereof.

Alternatively, the lipase(s) for use in accordance with the present invention and/or for use in the method of the present invention may comprise the amino acid sequence shown as SEQ ID No 1 or a variant, derivative or homologue thereof and/or the amino acid sequence shown as SEQ ID No 2 or a variant, derivative or homologue thereof.

One example of an amino acid sequence shown as SEQ ID No 2 is the amino acid sequence shown as SEQ ID No 2a or a variant, derivative or homologue thereof.

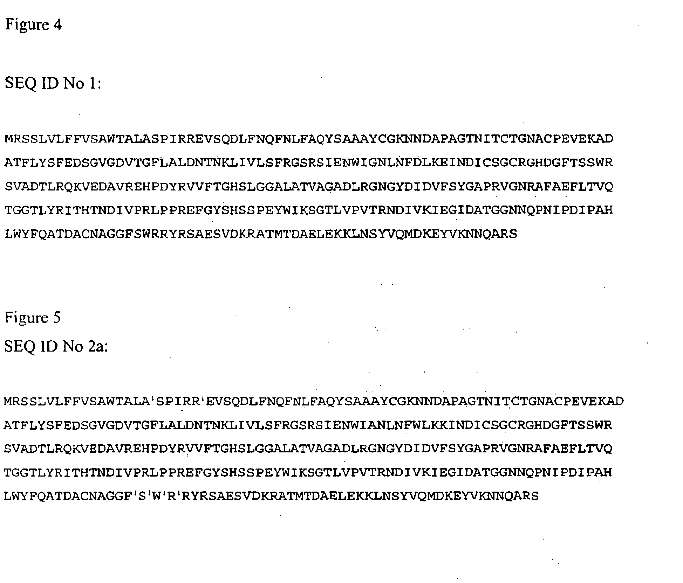

The amino acid sequence shown as SEQ ID No 2a may, for example, be truncated at various points in the amino acid sequence. Each of these truncated sequences is also termed SEQ ID No 2. The positions of suitable such truncations may be as shown in Figure 5 and as described below. In Figure 5, there are two possible variations at the N terminus, and four at the C- terminus of SEQ ID No 2.

**Further dough additives or ingredients**

Typically, further dough additives or ingredients (components) include conventionally used dough additives or ingredients such as salt, sweetening agents such as sugars, syrups or artificial sweetening agents, lipid substances including shortening, margarine, butter or an animal or vegetable oil, glycerol and one or more dough additives such as emulsifying agents, starch degrading enzymes, cellulose or hemicellulose degrading enzymes, proteases, non-specific oxidising agents such as those mentioned above, flavouring agents, lactic acid bacterial cultures, vitamins, minerals, hydrocolloids such as alginates, carrageenans, pectins, vegetable gums including e.g. guar gum and locust bean gum, and dietary fibre substances.

The further dough additive or ingredient can be added together with any dough ingredient including the flour, water or optional other ingredients or additives, or the dough improving composition. The further dough additive or ingredient can be added before the flour, water, optional other ingredients and additives or the dough improving composition. The further dough additive or ingredient can be added after the flour, water, optional other ingredients and additives or the dough improving composition.

The further dough additive or ingredient may conveniently be a liquid preparation. However, the further dough additive or ingredient may be conveniently in the form of a dry composition.

Preferably the further dough additive or ingredient is selected from the group consisting of a vegetable oil, a vegetable fat, an animal fat, shortening, glycerol, margarine, butter, butterfat and milk fat.

Preferably the further dough additive or ingredient is at least 1% the weight of the flour component of dough. More preferably, the further dough additive or ingredient is at least 2%, preferably at least 3%, preferably at least 4%, preferably at least 5%, preferably at least 6%.

If the additive is a fat, then typically the fat may be present in an amount of from 1 to 5%, typically 1 to 3%, more typically about 2%.

**Further enzyme**

Further enzymes that may be used may be selected from the group consisting of a xylanase, a cellulase, a hemicellulase, a starch degrading enzyme, a protease, a lipoxygenase, an oxidoreductase, a lipase and an oxidising enzyme such as any one or more of glucose oxidase (EC 1.1.3.4), carbohydrate oxidase, glycerol oxidase, pyranose oxidase (EC 1.1.3.10) and hexose oxidase (EC 1.1.3.5).

Among starch degrading enzymes, amylases are particularly useful as dough improving additives. $\alpha$-amylase breaks downs starch into dextrins which are further broken down by $\beta$-amylase to maltose. Other useful starch degrading enzymes which may be added to a dough composition include glucoamylases and pullulanases.

Preferably, the further enzyme of the present invention is at least a xylanase and/or at least an amylase.

The term "xylanase" as used herein refers to xylanases (EC 3.2.1.32) which hydrolyse xylosidic linkages.

The term "amylase" as used herein refers to amylases such as $\alpha$-amylases (EC 3.2.1.1), which hydrolyse 1,4-$\alpha$-D-glucosidic linkages in polysaccharides containing three or more 1,4-$\alpha$-linked glucose units, $\beta$-amylases (EC 3.2.1.2) which hydrolyse 1,4-$\alpha$-D-glucosidic linkages in polysaccharides so as to remove successive maltose units from the non-reducing ends of the chains, and $\gamma$-amylase (EC 3.2.1.3) which hydrolyse the terminal 1,4-linked $\alpha$-D-glucose residues successively from non-reducing ends of chains with the release of $\beta$-D-glucose.

The further enzyme can be added together with any dough ingredient including the flour, water or optional other ingredients or additives, or the dough improving composition. The further enzyme can be added before the flour, water, and optionally other ingredients and additives or the dough improving composition. The further enzyme can be added after the flour, water, and optionally other ingredients and additives or the dough improving composition.

The further enzyme may conveniently be a liquid preparation. However, the composition may be conveniently in the form of a dry composition.

In some aspects of the present invention it may be found that some enzymes of the dough improving composition of the invention are capable of interacting with each other under the dough conditions to an extent where the effect on improvement of the rheological and/or machineability properties of a flour dough and/or the quality of the product made from dough by the enzymes is not only additive, but the effect is synergistic.

In relation to improvement of the product made from dough (finished product), it may be found that the combination results in a substantial synergistic effect in respect to crumb homogeneity as defined herein. Also, with respect to the specific volume of baked product a synergistic effect may be found.

**Nucleotide sequence**

The enzyme need not be a native enzyme. In this regard, the term "native enzyme" means an entire enzyme that is in its native environment and when it has been expressed by its native nucleotide sequence.

The nucleotide sequence of the present invention may be prepared using recombinant DNA techniques (i.e. recombinant DNA). However, in an alternative embodiment of the invention, the nucleotide sequence could be synthesised, in whole or in part, using chemical methods well known in the art (see Caruthers MH et al (1980) Nuc Acids Res Symp Ser 215-23 and Horn T et al (1980) Nuc Acids Res Symp Ser 225-232).

**Amino acid sequences**

The enzyme may be prepared/isolated from a suitable source, or it may be made synthetically or it may be prepared by use of recombinant DNA techniques.

**Variants/homologues/derivatives**

The present invention also encompasses the use of variants, homologues and derivatives of any amino acid sequence of an enzyme of the present invention or of any nucleotide sequence encoding such an enzyme. Here, the term "homologue" means an entity having a certain homology with the subject amino acid sequences and the subject nucleotide sequences. Here, the term "homology" can be equated with "identity".

In the present context, an homologous sequence is taken to include an amino acid sequence which may be at least 75, 85 or 90% identical, preferably at least 95 or 98% identical to the subject sequence. Typically, the homologues will comprise the same active sites etc. as the subject amino acid sequence. Although homology can also be considered in terms of similarity (i.e. amino acid residues having similar chemical properties/functions), in the context of the present invention it is preferred to express homology in terms of sequence identity.

Homology comparisons can be conducted by eye, or more usually, with the aid of readily available sequence comparison programs. These commercially available computer programs can calculate % homology between two or more sequences.

The invention will now be described by way of illustration in the following non-limiting examples and with reference to the following figures

Figure 1 which is a photographic image of a bread;

Figure 2 which is a photographic image of a bread; and

Figure 3 which is a photographic image of a bread.

Figure 4 shows SEQ ID No 1.

Figure 5 shows SEQ ID No 2a and shows by way of arrows some of the positions at which the amino acid sequence may be truncated.

EXAMPLES

**Definitions**

All PANODAN™ products contain DATEM (Di-acetyl tartaric acid ester of monoglycerides) and are obtained from Danisco A/S.

PANODAN™ 521: DATEM containing bacterial xylanase and fungal amylase

TS-E 662™ (obtained from Danisco A/S) is a product containing hexose oxidase (HOX) (EC 1.1.1.5) from *Chondrus*

*chrispus* expressed in *Hansenula polymorpha.*

SUREBake 800 (obtained from Danisco A/S) is a product containing hexose oxidase (HOX) (EC 1.1.1.5). SUREBake 800 may also be referred to as GRINDAMYL SUREBake 800.

TS-E 680™ (obtained from Danisco A/S) is a product containing fungal xylanase (EC 3.2.1.8) from *Aspergillus niger.*

TS-E 861™ (obtained from Danisco A/S) is a product containing fungal xylanase (EC 3.2.1.8) from *Aspergillus niger,* lipase (EC 3.1.1.3) from *Thermomyces lanuginosa* expressed in *Aspergillus oryzae,* and hexose oxidase (EC 1.1.1.5) from *Chondrus crispus* expressed in *Hansenula polymorepha.*

GRINDAMYL™ H 640 (obtained from Danisco A/S): contains bacterial xylanase

Grindamyl™ H 121 (obtained from Danisco A/S) is a fungal xylanase (EC 3.2.1.8) from *Aspergillus niger.*

Grindamyl™ EXEL 16 (obtained from Danisco A/S) is lipase (EC 3.1.1.3) from *Thermomyces lanuginosa* expressed in *Aspergillus oryzae.*

Grindamyl™ EXEL 66 (obtained from Danisco A/S) is a mixture of lipase (EC 3.1.1.3) from *Thermomyces lanuginosa* expressed in *Aspergillus oryzae* and a fungal xylanase (EC 3.2.1.8) from *Aspergillus niger.*

Lipopan F™ (Lipopan F BG) (obtained from Novozymes) is according to its producer (Novozymes) a purified lipolytic enzyme from *Fusarium oxysporum* produced by submerged fermentation of a genetically modified *Aspergillus oryzae* microorganism. According to its producer, Lipopan F has inherent activity toward phospholipids, glycolipids and triglycerides.

**Recipes/Procedures**

High Volume Tweedy

*Recipe*

| Product Name | % | Gram | ppm |
|---|---|---|---|
| Ijsvogel™ Flour (obtainable from Meneba, NL) | | 3000 | |
| Water | 58 | | |
| Salt | | 60 | |
| Compressed yeast | | 180 | |
| Ascorbic acid | | | 30 |

*Procedure:*

- Dough temperature: 29°C (dough temperature - flour temperature + 4°C = water temperature)
- Mixing: 55 WH no vacuum
- Resting: 5 min. at room temperature
- Scaling: 500 g (bread), 1350 g (rolls)
- Resting: 5 min. at room temperature
- Moulding: Puma I 13 II 18 (bread), Fortuna 3/17/7 (rolls), Glimek (moulding machine) 1:4, 2:3, 3:12, 4:14
- Proofing: 70 min. at 43°C, 70% RH. (bread), 50 min. at 34°C, 85% RH. (rolls)
- Baking: BAGO, 35 min. + 5 min. with the steamer open at 220°C, 12 sec. steam (bread), 17 min. at 220°C, 17 sec. steam (rolls)

Turkish Batard

*Recipe*

| Product name | % | Gram | ppm |
|---|---|---|---|
| Ijsvogel™ Flour (obtainable from Meneba, NL) | | 2000 | |
| Water | 57,00 | | |
| Compressed yeast | | 80 | |
| Salt | | 30 | |
| Ascorbic acid | | | 70 |

***Procedure:***

- Flour temperature: 15-17 °C (for trials - storage day before use at 15 °C)
- Mixing: 35 min. After 25 min. add salt
- After 30 min. add yeast
- Dough temperature: 23-25°C
- Resting: 30 min. Bulk rest on table (table = 22°C & 80% RH)
- Scaling 300 g. pieces
- Rounding: By hand
- Resting: 25 min. on table (table = 22°C & 80% RH)... start clock when scaling starts
- Molding = Glimek: 1:5, 2:4, 3:15, 4:10 ... 10 in inner position.
- Proofing: 60 min. & 90 min. for this trial at 30°C & 85% RH
- Shock test
- Baking: 20 min. in Bago1 & 25 min. in Bago2 .... the last 5 min. is with the damper open for both ovens.
- Bago1: 250°C start temperature 5 sec. steam with damper open. Oven temperature down to 230°C at once. Close damper after 1½ min.
- Bago2: 275°C start temperature 8 sec. steam with damper open. Oven temperature down to 260°C at once. Close damper after 1½ min.

Crispy Rolls

*Recipe:*

| Product Name | % | Gram | ppm |
|---|---|---|---|
| Danish silver flour | | 2000 | |
| Water | 58 / 60 | | |
| Compressed yeast | | 120 | |
| Salt | | 32 | |
| Sugar | | 32 | |
| Ascorbic acid | | | 40 |

*Procedure:*

- Mixing: Diosna 2 + 5 min. (depending on flour)
- Dough temperature: 26°C
- Scaling: 1350 g
- Resting: 10 min. at 30°C in heating cabinet
- Moulding: Fortuna 3/17/7
- Proofing: 45 min alternatively 90 min at 34°C, 85% RH.
- Baking: 18 min. at 220°C, 8 sec. steam (Bago-oven), 7 sec. steam (Wachtel-oven)
- (MIWE program 28) (0.35 litre steam, 15 min. at 2000°C, ½ min. at 2200°C)

US Toast

Here a sponge as a pre-mix is prepared, to all of which is then added the dough.

Total flour amount: 1.800,000 g.

Recipe

|  |  | Gr |  | % |
|---|---|---|---|---|
| **US Sponge**: | Flour | 900.000 | g | 50.000% |
|  | Water | 900.000 | g | 50.000% |
|  | Dry Yeast | 23.400 | g | 1.300% |
|  | Yeast Food | 5.400 | g | 0.300% |
|  | Enzyme Complex | 0.054 | g | 0.003% |
|  | ADA | 0.036 | g | 0.002% |

|  |  | Gr |  | % |
|---|---|---|---|---|
| **US Dough**: | Flour | 900.000 | g | 50.000% |
|  | Water | 234.000 | g | 13.000% |
|  | Dry Yeast | 25.200 | g | 1.400% |
|  | Sugar | 153.000 | g | 8.500% |
|  | Salt | 43.200 | g | 2.400% |
|  | Shortening (fat) | 36.000 | g | 2.000% |
|  | Sod.Prop. | 8.100 | g | 0.450% |
|  | Dimodan SDM-T (P100B) | 9.000 | g | 0.500% |
|  | Ascorbic acid. | 0.072 | g | 0.004% |
|  | '---------------> |  |  | *(=7,200 g to 1000 ml. Take 10 ml. from the solution)* |

|  |  |  |  |
|---|---|---|---|
| Datem 22-CA-60 | 4.500 | g | 0.2500% |
| Grindamyl S685 | 300 | PPM |  |
| Grindamyl H640 | 20 | PPM |  |
| TS-E 662 | 100 | PPM |  |

Care has to be taken with the water amount added from ascorbic acid solution and other water based solutions, for example in preparation of diluted solutions.

The extra added water amount should be withdrawn from the water amount on the dough-side of the recipe.

The enzyme complex is a mix of alpha amylase and amyloglucosidase.

DIMODAN SDM-T (P100/B) (obtained from Danisco A/S) is a distilled monoglyceride.

*Procedure:*

For the Sponge:

Water Temperature: 25°C

Hobart mixer

Step 1, 1min.
Step 2, 1min.
Step 3, 1min.

Fermentation: 2h & 15min. 40 °C & 80% RH (relative humidity)
45min. in freezer.
For the Dough:

Mix all ingredients together
- Diosna-Mixer: Speed 1, 120 secs & Speed 2, 450 secs (or 28°C dough temperature)

On table - rest 5 min.
Weigh out the breads at 450 g per bread - rest 5 min.
Glimek (moulding machine) adjustments: 1, 2, 14, 11 - & 9 cm - read on outer position.

Fermentation:

1h & 10min. 45°C & 90% RH

Bake-off:

Start temperature= 250°C in 25 min.
Insert the breads and adjust bake-off temperature to 200 °C at once.

**Baking trials**

In each trial the dough characteristic, stickiness and all over bread score have been evaluated. The dough characteristic is a total of three different parameters: dough extensibility evaluated just after mixing and again after resting and stickiness after resting. Each parameter has been evaluated by bakers on a scale from 1 - 10, where 10 are the best. The score in the examples are a total of these different scores.
Stickiness evaluation has been subjectively evaluated by bakers just after mixing on a scale from 1 to 10, where 10 is the best, meaning non sticky.
All over bread score is a total of an evaluation made on bread crust, -crumb, possible capping and all over energy of the bread. Again each parameter is evaluated on a scale from 1 - 10, where 10 is the best.

EXAMPLE 1: Testing alternatives in Tweedy bread (UK procedure)

The breads were rested for 70 min each and after a full proofing, each bread was shock treated in order to evaluate the shock resistance and thereby the dough stability.
In the baking trials, both pure enzyme solutions and combinations of DATEM and enzymes were tested as alternative to Lipopan F.

Baking trials 4969-29

| **Test** | **Specific volume, ccm/g** | **Shocked volume, ccm/g** | **Dough characteristic** | **Dough stickiness** | **All over bread score** |
|---|---|---|---|---|---|
| 0.4% PANODAN GB | 5.6 | 4.64 | 15 | 4 | 29 |

(continued)

| Test | Specific volume, ccm/g | Shocked volume, ccm/g | Dough characteristic | Dough stickiness | All over bread score |
|---|---|---|---|---|---|
| 0.2% PANODAN GB, 100 ppm GRINDAMYL H121, 100 ppm TS-E 662 | 5.75 | 4.92 | 14 | 4 | 30 |
| 100 ppm TS-E 662, 100 ppm GRINDAMYL H 121, 100 ppm GRINDAMYL EXEL 16 | 5.57 | 4.47 | 14 | 4 | 20 |
| 40 ppm Lipopan F | 5.7 | 4.6 | 13 | 4 | 29 |
| 0.2% PANODAN GB, 20 ppm Lipopan F | 5.88 | 4.6 | 14 | 4 | 27 |
| 20 ppm Lipopan F, 100 ppm TS-E 662, 100 ppm GRINDAMYL H 121 | 5.65 | 4.78 | 14 | 4 | 29 |
| 40 ppm Lipopan F, 100 ppm TS-E 662, 100 ppm GRINDAMYL H 121 | 5.79 | 4.82 | 13 | 4 | 29 |

From the results it can be concluded that PANODAN GB results in a better crust of the product and a product.

The combination of PANODAN GB in combination with xylanase and hexose oxidase yields a beneficial effect.

When using DATEM and/or HOX in combination with GRINDAMYL EXEL 66 the volume is increased significantly and the crust is considerably improved. The test with 0.1% PANODAN GB 100 ppm GRINDAMYL EXEL 66 and 100 ppm TS-E 662 (HOX), gave a significantly good result at the same level as 0.4% PANODAN GB. Use of DATEM clearly gives a significantly positive effect on the crust as compared to pure enzyme solutions.

EXAMPLE 2: Testing alternatives in Turkish batard

Baking trials 7258-2

| Test | Specific volume, ccm/g | Dough characteristic* | Dough stickiness** | All over bread score*** |
|---|---|---|---|---|
| 15ppm Lipopan F, 60 ppm TS-E 680 | 5.01 | 14 | 4 | 33 |
| 40 ppm Lipopan F | 3.78 | 15 | 5 | 32 |
| 100 ppm TS-E 861* | 5.03 | 16 | 5 | 44 |
| *A combination of fungal xylanase, 1,3 triglyceride degrading lipase and hexose oxidase. | | | | |

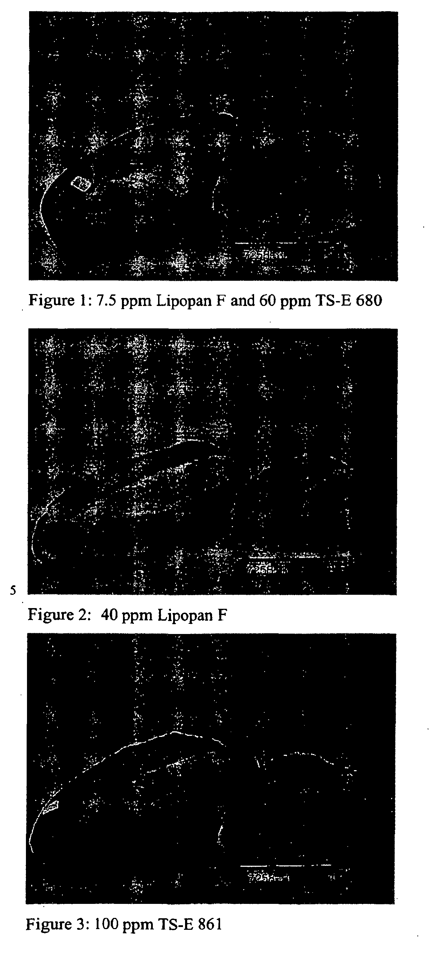

Both from the specific volume in the table as well as the pictures shown in Figures 1 - 3 it can be concluded that TS-E 861 performs better.

EXAMPLE 3: Testing alternatives in Crispy Rolls:

The rolls were fermented at two different fermentation times - 45 and 90 min in order to stress the system and thereby give a better picture of the dough strengthening effect of the products. In general it can be said that 90 min of fermentation for a small crispy roll is quite long.

Baking test: 4969-28

| Test | Specific volume 45 min, ccm/g | Specific value 90 min, ccm/g | Dough characteristic* | Dough stickiness** | All over bread score*** |
|---|---|---|---|---|---|
| 0.3% PANODAN A2020 | 7.15 | 8.48 | 14 | 5 | 25 |
| 30 ppm Lipopan F | 6.83 | 8.1 | 14 | 4 | 26 |
| 100 ppm TS-E 662, 100 ppm GRINDAMYL H 121, 100 ppm GRINDAMYL EXEL 16 | 6.98 | 8.98 | 14 | 5 | 27 |

From the results it can be seen that use of the combination of xylanase, 1,3 triglyceride degrading lipase and hexose oxidase produces beneficial results.

In short fermentation times (45 min.) at certain concentrations PANODAN A2020 and Lipopan F gave comparable volume results. However, 0.3% PANODAN A2020 showed better results with regard to crispiness of the crust and a better dough stability in general. We found that Lipopan F often gave a slightly more "wet" crust.

Using HOX in combination with GRINDAMYL EXEL 66 and PANODAN 660 results in an increase in dough stability.

With prolonged fermentation times (90 min.) all buns become relatively unstable. At some concentrations PANODAN A2020 does, however, give the best result.

EXAMPLE 4: Testing alternatives in US Toast

Test of Lipopan F in a US sponge and dough using flour from Mexico - hard wheat type. The breads have all been fully proofed and after that each bread have been shock treated in order to evaluate the shock resistance and thereby the dough stability.

Baking trials 7230-1:

| Test | Specific volume, ccm/g | Shocked volume, ccm/g |
|---|---|---|
| 0.5% PANODAN 521 | 6.88 | 5.47 |
| 10 ppm Lipopan F | 6.16 | 5.36 |
| 20 ppm Lipopan F | 6.44 | 5.30 |
| 40 ppm Lipopan F | 6.28 | 5.52 |
| 0.25% PANODAN 521, 20 ppm GRINDAMYL H 640, 100 ppm TS-E 662 | 7.15 | 5.74 |

From these tests it is clear that the use of HOX results in a far better dough stability and consequently an increase of volume.

EXAMPLE 5: Testing alternatives in a dough

In order to assess the influence of PANODAN® A2020 (a DATEM) as well as GRINDAMYL™ SUREBake 800 (a hexose oxidase) and combinations thereof on dough stability, trials were conducted on the Faringraph using a standard medium flour quality.

The following recipe/procedure was used in the test:

300 g Flour
6 g Salt
20 ppm Ascorbic Acid
Water according to 500 BU (58,0%)

• Dry mix for 4 min.

19

In the baking trials, combinations of DATEM and enzymes were tested and compared to the control (i.e. no additional ingredients).

The following results were obtained:

| Test | Arrival time (min) | Dough development (min) | Dough stability (min) | Softening (BU) |
|---|---|---|---|---|
| - (Control) | 1 | 2,5 | 15,6 | 50 |
| 0,4% PANODAN® A2020 | 1 | 2,2 | 17,7 | 20 |
| 300 ppm SUREBake800 | 1 | 2,9 | 22,2 | 20 |
| 150 ppm SUREBake800 | 1 | 2,3 | 22,4 | 20 |
| 0,4% PANODAN® A2020, 300 ppm SUREBake800 | 1,5 | 2,4 | 33,7 | 20 |
| 0,4% PANODAN® A2020, 150 ppm SUREBake800 | 1 | 2,3 | 25,0 | 20 |

From the results it can be concluded that use of PANODAN® A2020 alone and GRINDAMYL™ SUREBake 800 alone results in an increased dough stability of the dough system and a reduced softening effect, meaning that the dough system is stabilised significantly compared to the control system. The addition of PANODAN® A2020 and GRINDAMYL™ SUREBake 800 in combination results in a greater increase in the dough stability, compared to when the ingredients were used alone.

EXAMPLE 6: Testing alternatives in Crispy rolls

In order to detect the effect of DATEM or phospholipase, hexose oxidase and combinations thereof on dough stability and the final bread volume, trials were carried out using a crispy roll recipe. In the trial, the fermentation time was varied in order to stress the system.

The following recipe/procedure was used for this baking trial:

Mixing: Diosna 2 + 5 min. (depending on flour)

Dough temperature: 26°C

Scaling: 1350 g

Resting: 10 min. at 30°C in heating cabinet

Moulding: Fortuna 3/17/7

Proofing: 45 min, 70 min and 90 min. at 34°C, 85% RH.

Baking: 18 min. at 220°C, 8 sec. steam (Bago-oven), 7 sec. steam (Wachtel-oven) (MIWE program 28) (0.35 litre steam, 15 min. at 200C, ½ min. at 220°C).

All trials were optimised with 100 ppm GRINDAMYL™ A1000 and 20 ppm ascorbic acid.

| Test | Specific volume g/ccm 45 min | Specific volume g/ccm 70 min | Specific volume g/ccm 90 min | Dough handling properties after mixing |
|---|---|---|---|---|
| - (Control) | 6.27 | 7.9 | 8.81 | 5 |
| 0.3% PANODAN® A2020 | 7.33 | 9.14 | 9.7 | 6 |
| 150 ppm SUREBake800 | 6.36 | 7.79 | 9.02 | 6 |

(continued)

| Test | Specific volume g/ccm 45 min | Specific volume g/ccm 70 min | Specific volume g/ccm 90 min | Dough handling properties after mixing |
|---|---|---|---|---|
| 300 ppm SUREBake800 | 6.39 | 7.91 | 8.99 | 7 |
| 0.3% PANODAN® A2020, 150 ppm SUREBake800 | 7.86 | 9.3 | 10.65 | 6 |
| 0.3% PANODAN® A2020, 300 ppm SUREBake800 | 7.79 | 9.16 | 10.24 | 7 |
| 30 ppm Lipopan F | 7.29 | 9.07 | - | - |
| 30 ppm Lipopan F, 150 ppm SUREBake800 | 7.42 | 9.19 | - | - |
| 20ppm Lipopan F | 5.19 | 6.79 | - | - |
| 20 ppm Lipopan F, 100 ppm SUREBake800 | 5.33 | 7.32 | - | - |

The dough handling characteristics were evaluated by bakers on a scale from 1 to 10, where 10 is the best.

The results show that at an effective dosage the use of DATEM alone and phospholipases alone have a greater effect on the baking performance of the system with regards to specific volume when compared to the effect of hexose oxidase when used alone. However, using combinations of DATEM or phospholipase and hexose oxidase results in an even greater influence on the specific volume.

With regards to the dough handling properties, it was observed that both DATEM and hexose oxidase have a positive influence on the reduction of the stickiness of the dough.

EXAMPLE 7: Testing alternatives in Tweedy toast bread - shock treated

In this baking trial, DATEM and hexose oxidase and combinations thereof were tested with regards to the effect on shock stability of a wheat dough system.

The following recipe and procedure was used for the test:

Tweedy Toast Bread Recipe:

| | |
|---|---|
| Flour | 3000g |
| Water | 1890g |
| Compressed Yeast | 120g |
| Salt | 60g |
| Fat | 15g |
| | |
| Ascorbic acid | 20ppm |

The flour used was Ijsvogel™ flour (obtainable from Meneba, NL)

| | |
|---|---|
| Dough temperature: | 29°C (dough temperature - flour temperature + 4°C = water temperature) |
| Mixing: | 55 WH. Vacuum 40 cm Hg (depending on flour) |
| Resting: | 5 min. at room temperature |
| Scaling: | 900 g |
| Resting: | 5 min. at room temperature |
| Moulding: | Glimek: 1:4, 2:3, 3:16, 4:15 |
| Proofing: | 70 min. at 43°C, 70% RH. |

(continued)

Baking: 35 min. + 5 min with the steamer open, at 220°C in BAGO-oven.

The baking trials were optimised with 100 ppm GRINDAMYL™ A1000 and 20 ppm ascorbic acid.

The dough handling characteristics were evaluated by bakers on a scale from 1 to 10, where 10 is the best.

The following results were obtained:

| Test | Specific volume | Volume of shock treated bread | Dough handling properties |
|---|---|---|---|
| - (Control) | 4.75 | 4.22 | 5 |
| 0.3% PANODAN® A2020 | 4.97 | 4.65 | 6 |
| 300 ppm SUREBake800 | 4.88 | 4.35 | 7 |
| 0.3% PANODAN® A2020, 300 ppm SUREBake800 | 5.28 | 4.99 | 7 |

The results show that the use of DATEM alone improves the volume and dough handling properties, whereas the use of hexose oxidase alone has a greater improvement effect on the dough handling properties. However, using combinations of DATEM and hexose oxidase results in an even greater improving influence on the specific volume and dough handling properties.

**Conclusion**

Based on the different dough rheology and baking trials it can be concluded that use of both DATEM and hexose oxidase alone results in an increased dough and shock stability which can be improved even further by use of combinations of the two products. The same results/tendencies are seen when a phospholipase like Lipopan F is used instead of PANODAN® A 2020.

SEQUENCE LISTINGS

SEQ ID No 1:

MRSSLVLFFVSAWTALASPIRREVSQDLFNQFNLFAQYSAAAYCGKNNDAPAGTNITCTGNACPEVEKAD
ATFLYSFEDSGVGDVTGFLALDNTNKLIVLSFRGSRSIENWIGNLNFDLKEINDICSGCRGHDGFTSSWR
SVADTLRQKVEDAVREHPDYRVVFTGHSLGGALATVAGADLRGNGYDIDVFSYGAPRVGNRAFAEFLTVQ
TGGTLYRITHTNDIVPRLPPREFGYSHSSPEYWIKSGTLVPVTRNDIVKIEGIDATGGNNQPNIPDIPAH
LWYFQATDACNAGGFSWRRYRSAESVDKRATMTDAELEKKLNSYVQMDKEYVKNNQARS

SEQ ID No 2:
Seq ID No. 2 includes one or more of following the sequences
SEQ ID No. 2a:

MRSSLVLFFVSAWTALASPIRREVSQDLFNQFNLFAQYSAAAYCGKNNDAPAGTNITCTGNACPEVEKAD
ATFLYSFEDSGVGDVTGFLALDNTNKLIVLSFRGSRSIENWIANLNFWLKKINDICSGCRGHDGFTSSWR
SVADTLRQKVEDAVREHPDYRVVFTGHSLGGALATVAGADLRGNGYDIDVFSYGAPRVGNRAFAEFLTVQ
TGGTLYRITHTNDIVPRLPPREFGYSHSSPEYWIKSGTLVPVTRNDIVKIEGIDATGGNNQPNIPDIPAH
LWYFQATDACNAGGFSWRRYRSAESVDKRATMTDAELEKKLNSYVQMDKEYVKNNQARS

SEQ ID No. 2b etc.:

One or more of the following truncations (for further reference see Figure 5)

Truncation of the N-terminal sequence before "↓SPIRR..."
Truncation of the N-terminal sequence before "↓EVSQDLFNQFN..."
Truncation of the C-terminal sequence after "...AHLWYFQATDACNAGGF↓"
Truncation of the C-terminal sequence after "...AHLWYFQATDACNAGGFS↓"
Truncation of the C-terminal sequence after "...AHLWYFQATDACNAGGFSW↓"
Truncation of the C-terminal sequence after "...AHLWYFQATDACNAGGFSWR↓"

## Claims

1. A method of improving the rheological and/or machineability properties of a flour dough and/or the quality of a product made from the dough, comprising adding to the dough a combination comprising a maltose oxidising oxidoreductase and an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism.

2. The method according to claim 1 wherein said maltose oxidising oxidoreductase is a hexose oxidoreductase.

3. The method according to claim 2 wherein the hexose oxidoreductase is isolated from red algae.

4. The method according to claim 3 wherein said red algae is *Iridophycus flaccidum*, *Chondrus crispus*, or *Euthora cristata*.

5. The method according to any one of claims 1 to 4 wherein the flour dough comprises flour, water and at least one further dough additive or ingredient.

6. The method according to claim 5 wherein the at least one further dough additive or ingredient is selected from the group consisting of a vegetable oil, a vegetable fat, an animal fat, shortening, butterfat, glycerol, and milk fat.

7. The method according to claim 6 wherein said at least one further dough additive or ingredient is present in an amount of from 1 to 5% by the weight of a flour component of the dough.

8. The method according to any one of claims 1 to 7 wherein the flour dough comprises a hard flour.

9. The method according to any one of claims 1 to 8 wherein the product is bread product.

10. The method according to any one of claims 1 to 9 wherein at least one further enzyme is added to the dough ingredients, dough additives or the dough.

11. The method according to claim 10 wherein the at least one further enzyme is selected from the group consisting of a xylanase, a cellulase, a hemicellulase, a starch degrading enzyme, a protease, a lipoxygenase, an oxidoreductase and a lipase.

12. The method according to claim 11 wherein the at least one further enzyme is at least a xylanase and/or at least an amylase.

13. The method according to any one of claims 1 to 12 wherein said flour dough comprises a further emulsifier.

14. A dough improving composition comprising a maltose oxidising oxidoreductase and an emulsifying agent wherein the emulsifying agent is a lipase and wherein said lipase is a purified lipolytic enzyme from *Fusarium oxysporum* produced by submerged fermentation of a genetically modified *Aspergillus oryzae* microorganism.

15. The dough improving composition according to claim 14 wherein said maltose oxidising oxidoreductase is a hexose oxidoreductase.

16. The dough improving composition according to claim 15 wherein the maltose oxidising oxidoreductase is isolated from red algae.

17. The dough improving composition according to claim 16 wherein said red algae is *Iridophycus flaccidum, Chondrus crispus*, or *Euthora cristata*.

18. The dough improving composition according to any one of claims 14 to 17 wherein the dough improving composition comprises at least one further dough additive or ingredient.

19. The dough improving composition according to claim 18 wherein the at least one further dough additive or ingredient is selected from the group consisting of a vegetable oil, a vegetable fat, an animal fat, shortening, butterfat, glycerol, and milk fat.

20. The dough improving composition according to claim 19 wherein said at least one further dough additive or ingredient is present in an amount of from 1 to 5% by the weight of a flour component of the dough.

21. The dough improving composition according to claims 18 wherein the at least one further dough additive or ingredient is a hard wheat flour.

22. The dough improving composition according to any one of claims 14 to 21 wherein at least one further enzyme is added to the dough ingredients or dough additives.

23. The dough improving composition according to claim 22 wherein the at least one further enzyme is selected from the group consisting of a xylanase, a cellulase, a hemicellulase, a starch degrading enzyme, a protease, a lipoxygenase, an oxidoreductase and a lipase.

24. The dough improving composition according to claim 21 wherein the at least one dough additive is at least a xylanase and/or at least an amylase.

25. Use of the dough improving composition according to any one of claims 22 to 24 in baking.

26. Use of the dough improving composition according to any one of claims 14 to 24 wherein said composition improves the rheological and/or machineability properties of flour dough.

27. Use of the dough improving composition according to any one of claims 14 to 24 wherein said composition improves the volume of a baked product made from a flour dough.

28. Use of the dough improving composition according to any one of claims 14 to 24 in the manufacture of a product made from dough wherein the product is a bread product.

29. Use of a combination comprising a maltose oxidising oxidoreductase and an emulsifying agent in the manufacture of a dough wherein said combination improves the rheological and/or machineability properties of the dough and/or the quality of a product made from the dough wherein said emulsifying agent is a lipase and wherein said lipase is a purified lipolytic enzyme from *Fusarium oxysporum* produced by submerged fermentation of a genetically modified *Aspergillus oryzae* microorganism.

30. A process for producing the dough improving composition according to any one of claims 22 to 24 comprising adding to one or two of the components of said dough improving composition two or one of the other components respectively.

31. A baked product or dough obtained from the dough improving composition according to any one of claims 22 to 24.


**Patentansprüche**

1. Verfahren zum Verbessern der rheologischen und/oder Bearbeitbarkeits-Eigenschaften eines Mehlteigs und/oder der Qualität eines aus dem Teig hergestellten Produkts, umfassend das Zugeben einer Kombination umfassend eine Maltose-oxidierende Oxidoreduktase und ein Emulgierungsmittel zu dem Teig, wobei das Emulgierungsmittel eine Lipase ist und wobei die Lipase ein gereinigtes lipolytisches Enzym aus *Fusarium oxysporum,* hergestellt durch submerse Fermentation eines genetisch modifizierten *Aspergillus-oryzae-Organismus,* ist.

**2.** Verfahren gemäß Anspruch 1, wobei die Maltose-oxidierende Oxidoreduktase eine Hexoseoxidoreduktase ist.

**3.** Verfahren gemäß Anspruch 2, wobei die Hexoseoxidoreduktase aus Rotalgen isoliert ist.

**4.** Verfahren gemäß Anspruch 3, wobei die Rotalgen *Iridophycus flaccidum, Chondrus crispus* oder *Euthora cristata* sind.

**5.** Verfahren gemäß einem der Ansprüche 1 bis 4, wobei der Mehlteig Mehl, Wasser und wenigstens einen weiteren Teig-Zusatzstoff oder -Inhaltsstoff umfasst.

**6.** Verfahren gemäß Anspruch 5, wobei der wenigstens eine weitere Teig-Zusatzstoff oder -Inhaltsstoff ausgewählt ist aus der Gruppe bestehend aus einem Pflanzenöl, einem Pflanzenfett, einem Tierfett, Backfett, Butterfett, Glycerol und Milchfett.

**7.** Verfahren gemäß Anspruch 6, wobei der wenigstens eine weitere Teig-Zusatzstoff oder -Inhaltsstoff in einer Menge von 1 bis 5 Gew.-% der Mehlkomponente des Teigs vorhanden ist.

**8.** Verfahren gemäß einem der Ansprüche 1 bis 7, wobei der Mehlteig ein hartes Mehl umfasst.

**9.** Verfahren gemäß einem der Ansprüche 1 bis 8, wobei das Produkt ein Brotprodukt ist.

**10.** Verfahren gemäß einem der Ansprüche 1 bis 9, wobei zu den Teig-Inhaltsstoffen, Teig-Zusatzstoffen oder zu dem Teig wenigstens ein weiteres Enzym zugegeben wird.

**11.** Verfahren gemäß Anspruch 10, wobei das wenigstens eine weitere Enzym ausgewählt ist aus der Gruppe bestehend aus einer Xylanase, einer Cellulase, einer Hemicellulase, einem stärkeabbauenden Enzym, einer Protease, einer Lipoxygenase, einer Oxidoreduktase und einer Lipase.

**12.** Verfahren gemäß Anspruch 11, wobei das wenigstens eine weitere Enzym wenigstens eine Xylanase und/oder wenigstens eine Amylase ist.

**13.** Verfahren gemäß einem der Ansprüche 1 bis 12, wobei der Mehlteig einen weiteren Emulgator umfasst.

**14.** Teigverbessernde Zusammensetzung umfassend eine Maltose-oxidierende Oxidoreduktase und ein Emulgierungsmittel, wobei das Emulgierungsmittel eine Lipase ist und wobei die Lipase ein gereinigtes lipolytisches Enzym aus *Fusarium oxysporum,* hergestellt durch submerse Fermentation eines genetisch modifizierten *Aspergillus-oryzae*-Organismus, ist.

**15.** Teigverbessernde Zusammensetzung gemäß Anspruch 14, wobei die Maltose-oxidierende Oxidoreduktase eine Hexoseoxidoreduktase ist.

**16.** Teigverbessernde Zusammensetzung gemäß Anspruch 15, wobei die Maltose-oxidierende Oxidoreduktase aus Rotalgen isoliert ist.

**17.** Teigverbessernde Zusammensetzung gemäß Anspruch 16, wobei die Rotalgen *Iridophycus flaccidum, Chondrus crispus* oder *Euthora cristata* sind.

**18.** Teigverbessernde Zusammensetzung gemäß einem der Ansprüche 14 bis 17, wobei die teigverbessernde Zusammensetzung wenigstens einen weiteren Teig-Zusatzstoff oder -Inhaltsstoff umfasst.

**19.** Teigverbessernde Zusammensetzung gemäß Anspruch 18, wobei der wenigstens eine weitere Teig-Zusatzstoff oder -Inhaltsstoff ausgewählt ist aus der Gruppe bestehend aus einem Pflanzenöl, einem Pflanzenfett, einem Tierfett, Backfett, Butterfett, Glycerol und Milchfett.

**20.** Teigverbessernde Zusammensetzung gemäß Anspruch 19, wobei der wenigstens eine weitere Teig-Zusatzstoff oder -Inhaltsstoff in einer Menge von 1 bis 5 Gew.-% der Mehlkomponente des Teigs vorhanden ist.

**21.** Teigverbessernde Zusammensetzung gemäß Anspruch 18, wobei der wenigstens eine weitere Teig-Zusatzstoff oder -Inhaltsstoff ein Hartweizenmehl ist.

**22.** Teigverbessernde Zusammensetzung gemäß einem der Ansprüche 14 bis 21, wobei zu den Teig-Inhaltsstoffen oder Teig-Zusatzstoffen wenigstens ein weiteres Enzym zugegeben wird.

**23.** Teigverbessernde Zusammensetzung gemäß Anspruch 22, wobei das wenigstens eine weitere Enzym ausgewählt ist aus der Gruppe bestehend aus einer Xylanase, einer Cellulase, einer Hemicellulase, einem stärkeabbauenden Enzym, einer Protease, einer Lipoxygenase, einer Oxidoreduktase und einer Lipase.

**24.** Teigverbessernde Zusammensetzung gemäß Anspruch 21, wobei der wenigstens eine Teig-Zusatzstoff wenigstens eine Xylanase und/oder wenigstens eine Amylase ist.

**25.** Verwendung der teigverbessernden Zusammensetzung gemäß einem der Ansprüche 22 bis 24 zum Backen.

**26.** Verwendung der teigverbessernden Zusammensetzung gemäß einem der Ansprüche 14 bis 24, wobei die Zusammensetzung die rheologischen und/oder Bearbeitbarkeits-Eigenschaften von Mehlteig verbessert.

**27.** Verwendung der teigverbessernden Zusammensetzung gemäß einem der Ansprüche 14 bis 24, wobei die Zusammensetzung das Volumen eines aus einem Mehlteig hergestellten gebackenen Produkts verbessert.

**28.** Verwendung der teigverbessernden Zusammensetzung gemäß einem der Ansprüche 14 bis 24 bei der Herstellung eines aus Teig hergestellten Produkts, wobei das Produkt ein Brotprodukt ist.

**29.** Verwendung einer Kombination umfassend eine Maltose-oxidierende Oxidoreduktase und ein Emulgierungsmittel bei der Herstellung eines Teigs, wobei die Kombination die rheologischen und/oder Bearbeitbarkeits-Eigenschaften des Teigs und/oder die Qualität eines aus dem Teig hergestellten Produkts verbessert, wobei das Emulgierungsmittel eine Lipase ist und wobei die Lipase ein gereinigtes lipolytisches Enzym aus *Fusarium oxysporum,* hergestellt durch submerse Fermentation eines genetisch modifizierten *Aspergillus-oryzae-Organismus*, ist.

**30.** Verfahren zum Herstellen der teigverbessernden Zusammensetzung gemäß einem der Ansprüche 22 bis 24, umfassend Zugeben zu einer oder zwei der Komponenten der teigverbessernden Zusammensetzung zwei bzw. eine der anderen Komponenten.

**31.** Gebackenes Produkt, erhalten aus der teigverbessernden Zusammensetzung gemäß einem der Ansprüche 22 bis 24.

## Revendications

**1.** Méthode d'amélioration des propriétés rhéologiques et/ou d'usinabilité d'une pâte de farine et/ou de la qualité d'un produit fait à partir de la pâte, comprenant l'addition à la pâte d'une combinaison comprenant une oxydoréductase oxydant le maltose et un agent émulsifiant où l'agent émulsifiant est une lipase et où ladite lipase est une enzyme lipolytique purifiée issue de *Fusarium oxysporum* produite par fermentation submergée d'un microorganisme d'*Aspergillus oryzae* génétiquement modifié.

**2.** Méthode selon la revendication 1, dans laquelle ladite oxydoréductase oxydant le maltose est une hexose oxydoréductase.

**3.** Méthode selon la revendication 2, dans laquelle l'hexose oxydoréductase est isolée à partir d'algues rouges.

**4.** Méthode selon la revendication 3, dans laquelle ladite algue rouge est *Iridophycus flaccidum, Chondrus crispus,* ou *Euthora cristata*.

**5.** Méthode selon l'une quelconque des revendications 1 à 4, dans laquelle la pâte de farine comprend de la farine, de l'eau et au moins un autre additif ou ingrédient de pâte.

**6.** Méthode selon la revendication 5, dans laquelle le au moins un autre additif ou ingrédient de pâte est choisi dans le groupe constitué par une huile végétale, une matière grasse végétale, une matière grasse animale, un shortening, une matière grasse du beurre, le glycérol et une matière grasse du lait.

7. Méthode selon la revendication 6, dans laquelle ledit au moins un autre additif ou ingrédient de pâte est présent selon une quantité allant de 1 à 5% en poids d'un composant de farine de la pâte.

8. Méthode selon l'une quelconque des revendications 1 à 7, dans laquelle la pâte de farine comprend une farine dure.

9. Méthode selon l'une quelconque des revendications 1 à 8, dans laquelle le produit est un produit de pain.

10. Méthode selon l'une quelconque des revendications 1 à 9, dans laquelle au moins une autre enzyme est ajoutée aux ingrédients de la pâte, aux additifs de la pâte ou à la pâte.

11. Méthode selon la revendication 10, dans laquelle la au moins une autre enzyme est choisie dans le groupe constitué par une xylanase, une cellulase, une hémicellulase, une enzyme de dégradation de l'amidon, une protéase, une lipoxygénase, une oxydoréductase et une lipase.

12. Méthode selon la revendication 11, dans laquelle la au moins une autre enzyme est au moins une xylanase et/ou au moins une amylase.

13. Méthode selon l'une quelconque des revendications 1 à 12, dans laquelle ladite pâte de farine comprend un autre émulsifiant.

14. Composition d'amélioration de pâte, comprenant une oxydoréductase oxydant le maltose et un agent émulsifiant où l'agent émulsifiant est une lipase et où ladite lipase est une enzyme lipolytique purifiée issue de *Fusarium oxysporum* produite par fermentation submergée d'un microorganisme d'*Aspergillus oryzae* génétiquement modifié.

15. Composition d'amélioration de pâte selon la revendication 14, dans laquelle ladite oxydoréductase oxydant le maltose est une hexose oxydoréductase.

16. Composition d'amélioration de pâte selon la revendication 15, dans laquelle l'oxydoréductase oxydant le maltose est isolée à partir d'algues rouges.

17. Composition d'amélioration de pâte selon la revendication 16, dans laquelle ladite algue rouge est *Iridophycus flaccidum, Chondrus crispus,* ou *Euthora cristata.*

18. Composition d'amélioration de pâte selon l'une quelconque des revendications 14 à 17, dans laquelle la composition d'amélioration de pâte comprend au moins un autre additif ou ingrédient de pâte.

19. Composition d'amélioration de pâte selon la revendication 18, dans laquelle le au moins un autre additif ou ingrédient de pâte est choisi dans le groupe constitué par une huile végétale, une matière grasse végétale, une matière grasse animale, un shortening, une matière grasse du beurre, le glycérol et une matière grasse du lait.

20. Composition d'amélioration de pâte selon la revendication 19, dans laquelle ledit au moins un autre additif ou ingrédient de pâte est présent selon une quantité allant de 1 à 5% en poids d'un composant de farine de la pâte.

21. Composition d'amélioration de pâte selon la revendication 18, dans laquelle le au moins un autre additif ou ingrédient de pâte est une farine de blé dur.

22. Composition d'amélioration de pâte selon l'une quelconque des revendications 14 à 21, dans laquelle au moins une autre enzyme est ajoutée aux ingrédients de la pâte ou aux additifs de la pâte.

23. Composition d'amélioration de pâte selon la revendication 22, dans laquelle la au moins une autre enzyme est choisie dans le groupe constitué par une xylanase, une cellulase, une hémicellulase, une enzyme de dégradation de l'amidon, une protéase, une lipoxygénase, une oxydoréductase et une lipase.

24. Composition d'amélioration de pâte selon la revendication 21, dans laquelle le au moins additif de pâte est au moins une xylanase et/ou au moins une amylase.

**25.** Utilisation de la composition d'amélioration de pâte selon l'une quelconque des revendications 22 à 24 en panification.

**26.** Utilisation de la composition d'amélioration de pâte selon l'une quelconque des revendications 14 à 24, dans laquelle ladite composition améliore les propriétés rhéologiques et/ou d'usinabilité d'une pâte de farine.

**27.** Utilisation de la composition d'amélioration de pâte selon l'une quelconque des revendications 14 à 24, dans laquelle ladite composition améliore le volume d'un produit cuit préparé à partir d'une pâte de farine.

**28.** Utilisation de la composition d'amélioration de pâte selon l'une quelconque des revendications 14 à 24 dans la fabrication d'un produit fait à partir de pâte, où le produit est un produit de pain.

**29.** Utilisation d'une combinaison comprenant une oxydoréductase oxydant le maltose et un agent émulsifiant dans la fabrication d'une pâte, dans laquelle ladite combinaison améliore les propriétés rhéologiques et/ou d'usinabilité de la pâte et/ou la qualité d'un produit fait à partir de la pâte, où ledit agent émulsifiant est une lipase et où ladite lipase est une enzyme lipolytique purifiée issue de *Fusarium oxysporum* produite par fermentation submergée d'un microorganisme *d'Aspergillus oryzae* génétiquement modifié.

**30.** Procédé de production de la composition d'amélioration de pâte selon l'une quelconque des revendications 22 à 24, comprenant l'addition, à un ou deux parmi les composants de ladite composition d'amélioration de pâte, de deux ou un parmi les autres composants, respectivement.

**31.** Produit cuit ou pâte obtenu(e) à partir de la composition d'amélioration de pâte selon l'une quelconque des revendications 22 à 24.

Figure 1: 7.5 ppm Lipopan F and 60 ppm TS-E 680

Figure 2: 40 ppm Lipopan F

Figure 3: 100 ppm TS-E 861

Figure 4

SEQ ID No 1:

MRSSLVLFFVSAWTALASPIRREVSQDLFNQFNLFAQYSAAAYCGKNNDAPAGTNITCTGNACPEVEKAD
ATFLYSFEDSGVGDVTGFLALDNTNKLIVLSFRGSRSIENWIGNLNFDLKEINDICSGCRGHDGFTSSWR
SVADTLRQKVEDAVREHPDYRVVFTGHSLGGALATVAGADLRGNGYDIDVFSYGAPRVGNRAFAEFLTVQ
TGGTLYRITHTNDIVPRLPPREFGYSHSSPEYWIKSGTLVPVTRNDIVKIEGIDATGGNNQPNIPDIPAH
LWYFQATDACNAGGFSWRRYRSAESVDKRATMTDAELEKKLNSYVQMDKEYVKNNQARS

Figure 5
SEQ ID No 2a:

MRSSLVLFFVSAWTALA'SPIRR'EVSQDLFNQFNLFAQYSAAAYCGKNNDAPAGTNITCTGNACPEVEKAD
ATFLYSFEDSGVGDVTGFLALDNTNKLIVLSFRGSRSIENWIANLNFWLKKINDICSGCRGHDGFTSSWR
SVADTLRQKVEDAVREHPDYRVVFTGHSLGGALATVAGADLRGNGYDIDVFSYGAPRVGNRAFAEFLTVQ
TGGTLYRITHTNDIVPRLPPREFGYSHSSPEYWIKSGTLVPVTRNDIVKIEGIDATGGNNQPNIPDIPAH
LWYFQATDACNAGGF'S'W'R'RYRSAESVDKRATMTDAELEKKLNSYVQMDKEYVKNNQARS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2783150 A
- CA 2012723
- JP 4084848 A
- WO 9639851 A
- WO 9404035 A
- EP 1108360 A1
- WO 0203805 A
- WO 9931990 A
- EP 1041890 A

- WO 9640935 A
- US 6251626 B
- US SN60438852 A
- US SN10001136 B
- US SN60256902 B
- WO 0239828 A
- WO 0032758 A
- WO 9800136 A
- EP 0130064 A
- WO 9826057 A

**Non-patent literature cited in the description**

- **LIN S.F. et al.** *Biochim. Biophys. Acta,* 11 December 1991, vol. 1118 (1), 41-47
- **BEAN ; HASSID.** *J. Biol. Hem.,* 1956, vol. 218, 425-436
- **IKAWA.** *Methods Enzymol.,* 1982, vol. 89, 145-149
- **SULLIVAN et al.** *Biochemica et Biophysica Acta,* 1973, vol. 309, 11-22

- **BEAN et al.** *Journal of Biological Chemistry,* 1961, vol. 236, 1235-1240
- **DOWLING et al.** *Journal of Bacteriology,* 1956, vol. 72, 555-560
- **CARUTHERS MH et al.** *Nuc Acids Res Symp Ser,* 1980, 215-23
- **HORN T et al.** *Nuc Acids Res Symp Ser,* 1980, 225-232